# EUROPÄISCHE PATENTSCHRIFT

(11) **EP 3 771 379 B1**
(45) Veröffentlichungstag und Bekanntmachung des Hinweises auf die Patenterteilung: **18.05.2022**
(21) Anmeldenummer: 20183514.7
(22) Anmeldetag: 01.07.2020
(51) Int. Cl.: A47J 43/07

(54) **WÄGEMODULVORRICHTUNG FÜR EINE KÜCHENMASCHINE**
WEIGHING MODULE DEVICE FOR A KITCHEN APPLIANCE
DISPOSITIF FORMANT MODULE DE PESAGE POUR UN ROBOT DE CUISINE

(30) Priorität: 30.07.2019 DE 102019211310
(43) Veröffentlichungstag der Anmeldung: 03.02.2021
(73) Patentinhaber: BSH Hausgeräte GmbH, 81739 München (DE)
(72) Erfinder: Enci, David, 3331 Nazarje (SI); Ursej, Matjaz, 2382 Mislinja (SI); Holcinger, Tadej, 3220 Store (SI)

(56) Entgegenhaltungen:
- CN-A- 105 919 463
- CN-U- 206 618 485
- US-A1- 2018 368 615

## Beschreibung

### Gebiet der Erfindung

Die Erfindung betrifft eine Wägemodulvorrichtung für eine Küchenmaschine, aufweisend mindestens einen Kraftsensor auf einem Sensorelement, mindestens eine Aufnahmevorrichtung zur Verbindung des Sensorelements mit einer Grundplatte der Küchenmaschine, einen Saugfuß, der mit dem Sensorelement lösbar verbunden ist, wobei der Saugfuß beim bestimmungsgemäßen Gebrauch der Küchenmaschine als unteres Widerlager für das Sensorelement dient, und wobei die Aufnahmevorrichtung beim bestimmungsgemäßen Gebrauch der Küchenmaschine als oberes Widerlager für das Sensorelement dient, und wobei die Gewichtskraft der Masse der Küchenmaschine und des darin befindlichen Wägegutes über die Aufnahmevorrichtung auf das Sensorelement wirkt.

### Hintergrund der Erfindung

Es ist bekannt, dass Küchenmaschinen verschieden Funktionen in einer Maschine vereinen. So können Küchenmaschinen nicht nur rühren und Zerkleinern, sondern auch noch erhitzen, sogar interaktiv das Maschinenprogramm verändern und auch noch Wägegut wiegen. Die Funktion einer Waage beinhaltet stets, dass das Gewicht der Küchenmaschine und auch noch das Gewicht des Wägeguts über die Standfüße der Küchenmaschine abgleitet werden muss. Um Gewicht zu Messen, ist es zwangsläufig notwendig, dass im Pfad der abgeleiteten Kraft ein entsprechender Mechanismus oder Kraftsensor zur Messung des Gewichts vorhanden ist. Wiegt die Küchenmaschine bis zu 10 kg und soll die Wägefunktion auf 5g genau wiegen, so ergibt sich eine Präzision von 2,5 %o. Der Pfad der abgeleiteten Kraft muss also einerseits die Kräfte ableiten, die beim Rühren und zerkleinern aufgrund der dynamischen Belastung in der Maschine wirken und andererseits muss der im Pfand vorhandene Mechanismus oder der Kraftsensor die Kraft mit einer Präzision von besser als 2,5‰ aufnehmen. Häufig ist die Wägefunktion in den Standfüßen der Küchenmaschine angeordnet. An diese Füße werden also die Anforderungen gestellt, einerseits sehr stabil zu sein und andererseits mit hoher Präzision sehr feine Gewichtsunterschiede messen zu können. Wird die Gewichtskraft der Küchenmaschine auf mindestens drei Standfüße verteilt, so könne schon geringfügige Änderung der Trimmung der Küchenmaschine zu stark unterschiedlichen Messergebnissen in den Kraftsensoren der Küchenmaschine führen, die in der Regel in die Standfüße integriert sind. An die Standfüße werden also hohe Anforderungen an Stabilität und Präzision gestellt. US 2018/368615 offenbart die Merkmale des Oberbegriff des Anspruchs 1.

### Der Erfindung zugrundeliegende Aufgabe

Aufgabe der Erfindung ist es daher, eine verbesserte Wägemodulvorrichtung für eine Küchenmaschine zur Verfügung zu stellen, insbesondere eine Wägemodulvorrichtung, die unter der dynamischen Belastung der Küchenmaschine langzeitstabil ist und eine präzise Abnahme der Gewichtskraft erlaubt.

### Erfindungsgemäße Lösung

Die Bezugszeichen in sämtlichen Ansprüchen haben keine einschränkende Wirkung, sondern sollen lediglich deren Lesbarkeit verbessern.

Die erfindungsgemäße Aufgabe wird dadurch gelöst, dass das Sensorelement einen pilzkopfartigen Steckverbinder aufweist, der in einer dazu korrespondierenden, zentralen und beim bestimmungsgemäßen Gebrauch der Küchenmaschine nach oben weisenden Öffnung in dem Saugfuß steckt. Weitere vorteilhafte Ausgestaltungen sind in den Unteransprüchen zu Anspruch 1 angegeben. Vorteilhafte Aus- und Weiterbildungen, welche einzeln oder in Kombination miteinander eingesetzt werden können, sind Gegenstand der abhängigen Ansprüche und der nachfolgenden Beschreibung.

Nach dem Gedanken der Erfindung ist also vorgesehen, dass das Sensorelement der Wägemodulvorrichtung über einen Pilzkopf, der in einer dazu korrespondierenden Aufnahme eines Saugfußes steckt, die Kraft der Küchenmaschine auf den Untergrund ableitet. Im Stand der Technik, also bei im Markt verfügbaren Küchenmaschinen, ist es üblich, dass die Verbindung zwischen der Wägemodulvorrichtung und dem Fuß der Küchenmaschine über eine zylindrisches Verbindungselement geschieht, in das ein Hals des Saugfußes eingesteckt wird. Dabei wirkt der hals des Saugfußes als Patrize, hingegen wirkt das zylindrisches Verbindungselement als Matrize. In der vorgeschlagenen Wägemodulvorrichtung wirkt das Verbindungselement als Patrize, hingegen wirkt der Saugfuß als Matrize. Die Matrizenfunktion und die Patrizenfunktion der beiden korrespondierenden Teile ist also gegenüber dem Stand der Technik vertauscht. Durch die Aufnahme des Pilzkopfes in dem Saugfuß ist es möglich, dass der Saugfuß in einem geringen Fenster zwei Freiheitsgrade hat, um sich an eine möglicherweise nicht ebene Untergrundstruktur anzupassen und andererseits wird der Teller des Saugfußes nicht dauerhaft deformiert. Die dauerhafte Deformierung des Saugfußtellers hat nämlich zur Folge, dass die Saugwirkung mit der Zeit nachlässt, wenn sich das Elastomer oder Gummi des Saugfußes unter dem Druck der Deformationskraft mit der Zeit verformt.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche und der nachfolgenden Beschreibung.

In einer Ausgestaltung der erfindungsgemäßen Wägemodulvorrichtung kann vorgesehen sein, dass der Saugfuß eine tellerartige Struktur aufweist, wobei die konkave Tellerunterseite als Fußunterseite dient, und eine beim bestimmungsgemäßen Gebrauch der Küchenmaschine nach oben weisende Öffnung in Form einer etwa zylindrischen bis kegelstumpfartigen Aufnahmevorrichtung aufweist, welche einen nach innen weisenden Rand aufweist, der eine Unterseite der Pilzkappe des Steckverbinders des Sensorelements hintergreift. Der nach innen weisende Rand des Saugfußes umschließt den Pilzkopf des Sensorelements fest erlaubt aber in einem gewissen Fenster, dass sicher Saugfuß mit zwei Freiheitsgraden um einen bestimmten Raumwinkel bewegt. Dadurch kann sich der Saugfuß nicht ebenen Untergründen anpassen.

Dabei kann vorgesehen sein, dass der Saugfuß auf dem pilzkopfartigen Steckverbinder mit zwei Freiheitsgraden um einen Raumwinkel von 0,5° bis 2° verschwenkbar ist. Schon dieses Fenster reicht aus, um typischen Unebeneheiten eines Untergrundes genügend auszugleichen.

Für eine weitere Stabilisierung des Saugfußes, auch gegenüber einer scherenden Belastung, wenn die Küchenmaschine aufgrund ihrer eigenen dynamischen Lastwechsel wandert, kann vorgesehen sein, dass der Saugfuß auf dem pilzkopfartigen Steckverbinder durch mindestens ein Kragenelement des Sensorelements gesichert ist, das konzentrisch zu dem pilzkopfartigen Steckverbinder auf dem Sensorelement angeordnet ist, wobei das Kragenelement gewichtskraftfrei die zylindrische bis kegelstumpfartige Aufnahmevorrichtung des Saugfußes umschließt. Anders als bei der Matrizenfunktion des Sensorelements im Stand der Technik dient der hier vorgeschlagene Kragen nicht zur Lastabtragung, sondern ausschließlich zur Stabilisierung gegenüber einer scherenden Belastung oder einer kippenden Belastung über die Grenzen des Fensters der Bewegung mit Freiheitsgraden hinaus.

In Ausgestaltung der erfindungsgemäßen Wägemodulvorrichtung kann vorgesehen sein, dass der Kraftsensor ein Dehnungsmessstreifen ist, der auf der Basis einer etwa T-förmigen Struktur im Sensorelement angeordnet ist, wobei die T-förmige Struktur Teil eines ringförmigen bis rechteckförmigen Elements ist, wobei die T-förmige Struktur in den inneren Bereich des ringförmigen bis rechteckförmigen Elements ragt. Das Sensorelement weist also einen kreisförmigen bis rechteckigen Ring auf innerhalb dessen eine Zunge ragt, wobei auf der Zunge, die mit dem Ring verbunden ist, ein Dehnungsmesstreifen vorhanden ist, der schon geringste Verformungen der Zunge gegenüber dem Ring detektieren kann und als Kraftsignal an eine Signalauswertevorrichtung übertragen kann.

In weiterer Ausgestaltung der erfindungsgemäßen Wägemodulvorrichtung kann vorgesehen sein, dass das Sensorelement in einer zu seiner eigenen Struktur korrespondierenden Negativform der Aufnahmevorrichtung liegt und mit mindestens einem Widerhakenelement in der Negativform fixiert ist, wobei die in den inneren Bereich der ringförmigen bis rechteckförmigen Elements reichende T-förmige Struktur durch eine Bohrung in der Mitte der Negativform in der Aufnahmevorrichtung frei liegt und durch die Bohrung mit dem pilzkopfartigen Steckverbinder in Wirkverbindung steht. Die Aufahmevorrichtung ist also im Wesentlichen eine Platte, in der auf der Oberseite eine Vertiefung vorhanden ist, in welche die Sensorvorrichtung exakt hineinpasst. Dabei weist die nach innen weisende T-förmige Struktur wie eine Zunge in einen Bereich, die durch eine großzügige Bohrung in der Aufnahmevorrichtung freiliegt. Von unterhalb der Aufnahmevorrichtung ragt ein Hals eines Sensorfußes hinein, der mit dem pilzkopfartigen Steckverbinder auf dem Sensorelement steckt.

Um die erfindungsgemäßen Wägemodulvorrichtung vor typischen Einflüssen in einer Küche zu schützen, wie Feuchtigkeit, Speisereste, Öle und Fette, kann vorgesehen sein, dass die Aufnahmevorrichtung eine obere Verschlusskappe aufweist, welche die Sensorvorrichtung vor Einwirkung von Staub und Flüssigkeit, somit auch vor Speiseresten, Ölen und Fetten schützt.

In einer besonderen Ausgestaltung der erfindungsgemäßen Wägemodulvorrichtung kann vorgesehen sein, dass die Verschlusskappe Schraublöcher aufweist, durch welche die Verschlusskappe die Wägemodulvorrichtung auf der Grundplatte einer Küchenmaschine fixiert, wobei der pilzkopfartigen Steckverbinder zur Seite der Grundplatte ausgerichtet ist und durch eine Öffnung in der Grundplatte ragt. Es ist also vorgesehen, dass die erfindungsgemäße Wägemodulvorrichtung innerhalb der Küchenmaschine angeordnet wird, also auf der Grundplatte angeordnet wird, dabei ragt der pilzkopfartigen Steckverbinder durch die Grundplatte hindurch und nimmt dort den Saugfuß auf.

### Kurzbeschreibung der Zeichnungen

Die Erfindung wird anhand der folgenden Figuren, auf welche die Erfindung jedoch nicht beschränkt ist, näher erläutert. Es zeigt:
- Fig. 1: eine Aufnahmevorrichtung für ein Sensorelement als erstes Einzelteil der erfindungsgemäßen Wägemodulvorrichtung in einer perspektivischen Ansicht von schräg oben,
- Fig. 2.1: ein Sensorelement mit verbundenem pilzkopfartigem Steckverbinder und Kragenelementen in einer perspektivischen Ansicht von schräg oben,
- Fig. 2.2: das Sensorelement aus Figur 2.1 in einer perspektivischen Ansicht von schräg unten,
- Fig. 3: die Aufnahmevorrichtung aus Figur 1 mit eingesetztem Sensorelement aus den Figuren 2.1 und 2.2 in einer perspektivischen Ansicht von schräg oben,
- Fig. 4: das Sensorelement aus Figur 2.2 und einen Saugfuß mit Andeutung, wie der Saugfuß und das Sensorelement verbunden werden,
- Fig. 5.: die zusammengesetzte Wägemodulvorrichtung in einer perspektivischen Ansicht von der Seite,
- Fig. 6.1: eine Ansicht auf die Innenseite einer Grundplatte einer Küchenmaschine, mit eingesetzten Wägemodulvorrichtungen,
- Fig. 6.2: eine Ansicht auf die Außenseite (Unterseite) der Grundplatte aus Fig. 6.2, mit eingesetzten Wägemodulvorrichtungen,
- Fig. 7: ein typischer Aufbau einer Verbindung zwischen Sensormodul und Saugfuß aus dem im Markt vorhandenen Küchenmaschinen in einer Schnittzeichnung als STAND DER TECHNIK.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

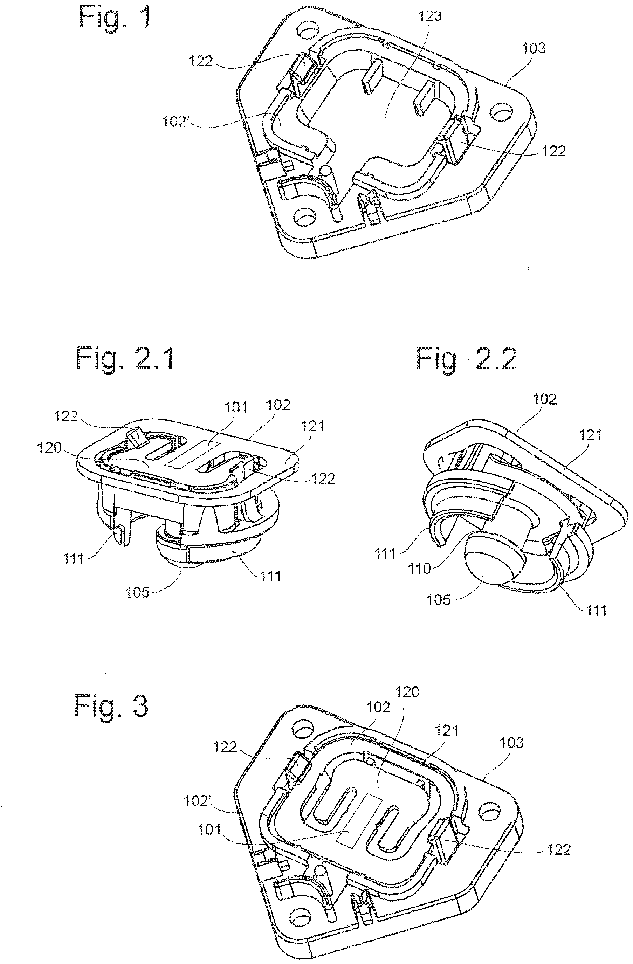

In **Figur 1** ist eine Aufnahmevorrichtung 103 einer erfindungsgemäßen Wägemodulvorrichtung 100 für ein Sensorelement 102 als erstes Einzelteil der erfindungsgemäßen Wägemodulvorrichtung in einer perspektivischen Ansicht von schräg oben dargestellt. Die hier beispielhaft gewählte Form der Aufnahmevorrichtung 103 ist fünfeckig. Die Form des Umfangs ist jedoch für die Erfindung von untergeordneter Bedeutung. In der Aufnahmevorrichtung 103 befindet sich eine große Bohrung 123 oder Ausnehmung, durch welche die Gewichtskraft abgetragen wird. In der im bestimmungsgemäßen Gebrauch nach oben weisenden Oberfläche der Aufnahmevorrichtung 103 befindet sich eine Negativform 102', die zur Form des in der Aufnahmevorrichtung 103 aufzunehmenden Sensorelements 102 korrespondiert und das Sensorelement 102 formschlüssig aufnimmt. Zur Fixierung des Sensorelements sind zwei Widerhakenelemente 122 vorhanden, welche das Sensorelement 102 in der Negativform 102' festhalten.

In **Figur 2.1** ist ein Sensorelement 102 mit verbundenem pilzkopfartigem Steckverbinder 105 und Kragenelementen 111 in einer perspektivischen Ansicht von schräg oben dargestellt. Der pilzkopfartigem Steckverbinder 105 ist in dieser Ansicht nahezu verdeckt. Das Sensorelement 102 besteht aus einem ringförmigen bis rechteckförmiges Element 121, das einen Dehnungsmesstreifen als Kraftsensor 101 trägt. Mit dem ringförmigen bis rechteckförmiges Element 121 ist der untere Teil des Sensorelements 102 über Widerhakenelemente 122' verbunden. wobei der untere Teil des Sensorelementes 102 den pilzkopfartigem Steckverbinder 105 und das Kragenelementen 111 zur Verbindung mit dem Saugfuß aufweist. Die Kraftableitung geschieht über das ringförmige bis rechteckförmige Element 121, welches eine nach innen weisende T- förmige Struktur 120 wie eine Zunge aufweist, die in dem ringförmigen Element 121 nach innen weist. Die Kraft wird über die nach innen weisende T- förmige Struktur 120 auf den unteren Teil des Sensorelementes 102 auf den Saugfuß 104 abgeleitet. Dabei verbiegt sich die nach innen weisende T- förmige Struktur 120 wie Zunge und verändert geringfügig die Länge des Kräftesensors 102 (hier ein Dehnungsmesstreifen), wodurch ein elektrisches Signal abgenommen werden kann, das zur weiteren Verarbeitung zur Verfügung steht.

Zur vollständigen Ansicht ist in **Figur** 2.2 das Sensorelement 102 aus Figur 2.1 in einer perspektivischen Ansicht von schräg unten dargestellt. Deutlich ist der pilzkopfartige Steckverbinder 105 erkennbar, der konzentrisch von zwei Kragenelementen 111 umgeben ist. Der pilzkopfartige Steckverbinder 105 wird wie eine Patrize in eine entsprechende Öffnung in einem Saugfuß 104 aufgenommen. Dabei unterstützen die Kragenelemente 111 den Saugfuß 104 gegenüber scherenden Belastungen.

In **Figur 3** ist schließlich dargestellt, wie das ringförmige bis rechteckförmige Element 121 in der Negativform 102' in der Aufnahmevorrichtung 103 aufgenommen ist und über die Widerhakenelemente 122 in der Negativform fixiert ist. Hierzu ist anzumerken, dass in Figur 3 der untere Teil des Sensorelementes 102 nicht vorhanden ist, daher sind in Figur 3 nur die Widerhakenelemente 122 und nicht die Widerhakenelemente 122' erkennbar.

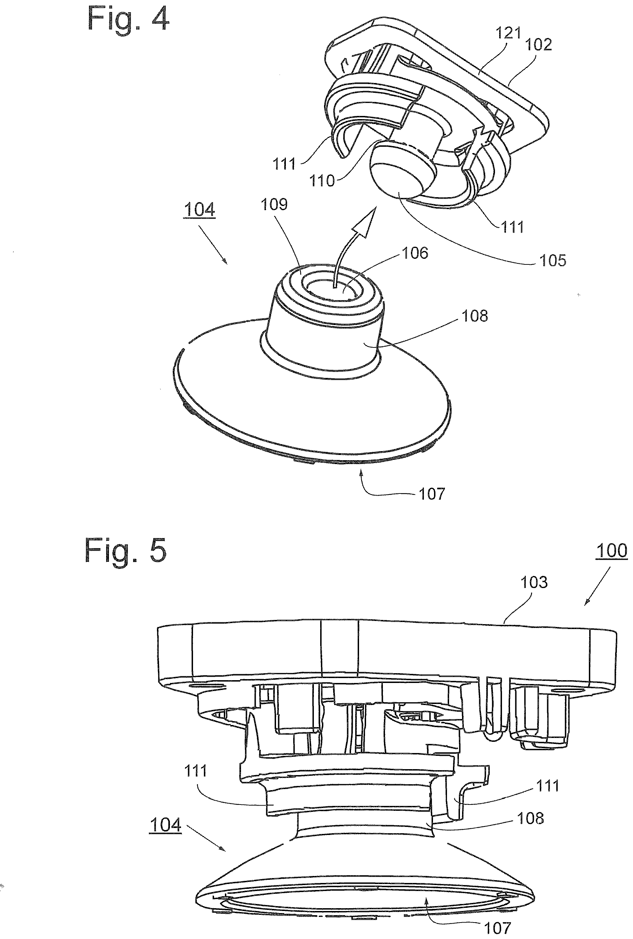

In **Figur 4** ist das Sensorelement 102 aus Figur 2.2 und ein Saugfuß 104 mit Andeutung dargestellt, wie der Saugfuß 104 und das Sensorelement 102 miteinander verbunden werden. Dazu stößt der pilzkopfartige Steckverbinder 105, der Teil des unteren Teils des Sensorelement 102 ist, wie eine Patrize in eine entsprechende Öffnung 106 des Saugfußes 104 als Matrize. Die Öffnung 106 in der halsartigen Aufnahmevorrichtung 108 weist einen nach innen weisenden Rand 109 auf, der im zusammengesteckten Zustand die Unterseite 110 des pilzkopfartige Steckverbinder 105 hintergreift und so den Saugfuß 104 fixiert.

In **Figur 5** ist schließlich die zusammengesetzte Wägemodulvorrichtung in einer perspektivischen Ansicht von der Seite skizziert. Deutlich ist zu sehen, wie der Saugfuß 104 mit dem unteren Teil des Sensorelementes 102 vereint ist, wobei das Sensorelement 102 selbst in der Aufnahmevorrichtung 103 aufgenommen ist. Die wie ein Hals oder ein Kegelstumpf geformte Aufnahmevorrichtung 108 des Saugfußes ist durch die Kragenelemente 111 gegenüber einer scherenden Beanspruchung geschützt. Nicht jedoch wird über die Kragenelemente 11 die Last der Küchenmaschine und des Wägegutes abgeleitet. Die Kragen sind kräftefrei und wirken nur bei scherender Beanspruchung, wenn der Saugfuß 104 auf dem pilzkopfartigen Steckverbinder 105 um wenige Winkelgarde rollen kann.

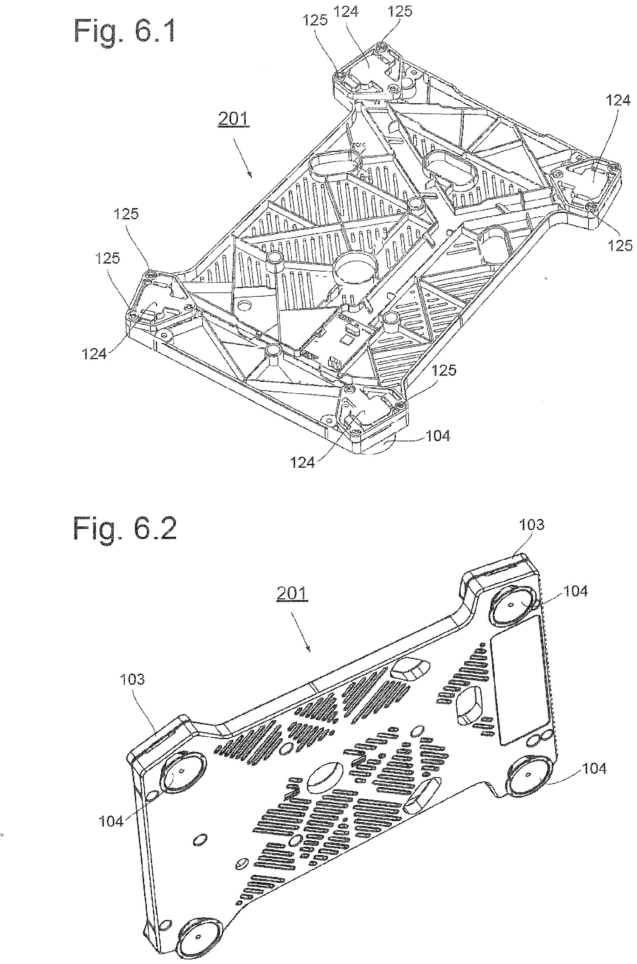

In den Figuren Figur 6.1 und Figur 6.2 ist dargestellt, wie die Wägevorrichtung 100 in die Grundplatte 201 einer Küchenmaschine integriert wird. Dazu ist vorgesehen, dass die Aufnahmevorrichtung 103 unter einer Verschlusskappe 124 angeordnet wird, wobei die Verschlusskappe 124 Schraublöcher 125 aufweist, die mit entsprechenden Schraublöchern in der Aufnahmevorrichtung 103 korrespondieren. Mit der Verschlusskappe 124 ist die Wägevorrichtung 100 auf der Innenseite einer Grundplatte 201 einer Küchenmaschine, bevorzugt an den Ecken moniert. In Figur 6.2 ist die Unterseite der Grundplatte aus Figur 6.1 dargestellt und dort ist zu sehen, dass die Saugfüße von der Unterseite der Grundplatte 210 die Grundplatte 201 durch entsprechende Öffnungen durchstoßen und durch die Grundplatte 201 hindurch ragen und mit dem Sensorelement der Wägevorrichtung verbunden sind.

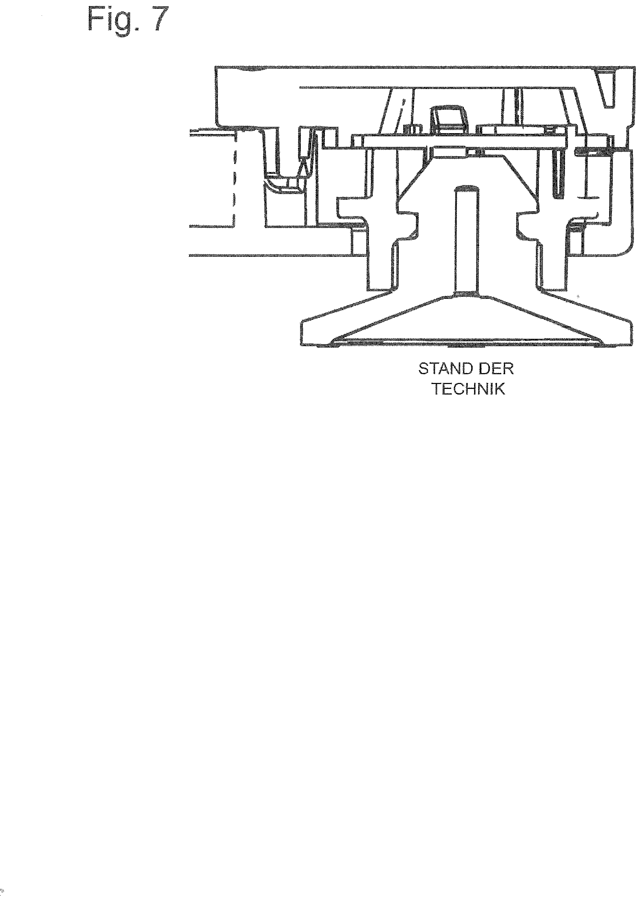

In **Figur 7** ist schließlich dargestellt, wie die Verbindung des Sensorelements mit einem Saugfuß in marktüblichen Küchenmaschinen als STAND DER TECHNIK umgesetzt ist. Bei marktüblichen Küchenmaschinen ist ein Dorn auf dem Saugfuß, der hier als Schnittzeichnung dargestellt ist, vorhanden, wobei der Dorn wie eine Patrize in eine entsprechende zylindrische Aufnahme des Sensorelementes als Matrize ragt. Dabei stößt der Rand der Mantelfläche der zylindrischen Aufnahmevorrichtung, die Matrize, auf die Oberseite des tellerförmigen Saugfußes, wodurch die Funktion des Saugfußes nicht nur beeinträchtigt wird, sondern auch noch dauerhaft verformt wird, wodurch sich das Elastomer oder das Gummi des Saugfußes dauerhaft, fast plastisch verändert.

Die Umkehr zwischen der Matrize und Patrize in der vorliegenden Wägevorrichtung ermöglicht eine dauerhaft stabile Anordnung des Saugfußes unterhalb der Küchenmaschine. Dadurch wird die Lebensdauer des Saugfußes (104) verlängert und die Wägemodulvorrichtung arbeitet länger zuverlässig.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausführungsformen von Bedeutung sein.

**Bezugszeichenliste**

| | | | |
|---|---|---|---|
| 100 | Wägemodulvorrichtung | 110 | Unterseite |
| 101 | Kraftsensor | 111 | Kragenelement |
| 102 | Sensorelement | 120 | T-förmige Struktur |
| 102' | Negativform | 121 | ringförmiges bis rechteckförmiges Element |
| 103 | Aufnahmevorrichtung | | |
| 104 | Saugfuß | 122 | Widerhakenelement |
| 105 | Steckverbinder | 122' | Widerhakenelement |
| 106 | Öffnung | 123 | Bohrung |
| 107 | konkave Tellerunterseite | 124 | Verschlusskappe |
| 108 | Aufnahmevorrichtung | 125 | Schraublöcher |
| 109 | Rand | 201 | Grundplatte |

## Patentansprüche

1. Wägemodulvorrichtung (100) für eine Küchenmaschine, aufweisend
- mindestens einen Kraftsensor (101) auf einem Sensorelement (102),
- mindestens eine Aufnahmevorrichtung (103) zur Verbindung des Sensorelements (102) mit einer Grundplatte (201) der Küchenmaschine,
- einen Saugfuß (104), der mit dem Sensorelement (102) lösbar verbunden ist, wobei der Saugfuß (104) beim bestimmungsgemäßen Gebrauch der Küchenmaschine als unteres Widerlager für das Sensorelement (102) dient, und
wobei die Aufnahmevorrichtung (103) beim bestimmungsgemäßen Gebrauch der Küchenmaschine als oberes Widerlager für das Sensorelement (102) dient, und wobei die Gewichtskraft der Masse der Küchenmaschine und des darin befindlichen Wägegutes über die Aufnahmevorrichtung (103) auf das Sensorelement (102) wirkt,
**dadurch gekennzeichnet, dass**
das Sensorelement (102) einen pilzkopfartigen Steckverbinder (105) aufweist, der in einer dazu korrespondierenden, zentralen und beim bestimmungsgemäßen Gebrauch der Küchenmaschine nach oben weisenden Öffnung (106) in dem Saugfuß (104) steckt.

2. Wägemodulvorrichtung für eine Küchenmaschine nach Anspruch 1,
**dadurch gekennzeichnet, dass**
der Saugfuß (104) eine tellerartige Struktur aufweist, wobei die konkave Tellerunterseite (107) als Fußunterseite dient, und
eine beim bestimmungsgemäßen Gebrauch der Küchenmaschine nach oben weisende Öffnung in Form einer etwa zylindrischen bis kegelstumpfartigen Aufnahmevorrichtung (108) aufweist, welche einen nach innen weisenden Rand (109) aufweist, der eine Unterseite (110) der Pilzkappe des Steckverbinders (105) des Sensorelements (102) hintergreift.

3. Wägemodulvorrichtung für eine Küchenmaschine nach Anspruch 2
**dadurch gekennzeichnet, dass**
der Saugfuß (104) auf dem pilzkopfartigen Steckverbinder (105) mit zwei Freiheitsgraden um einen Raumwinkel von 0,5° bis 2° verschwenkbar ist.

4. Wägemodulvorrichtung für eine Küchenmaschine nach einem der Ansprüche 2 bis 3,
**dadurch gekennzeichnet, dass**
der Saugfuß (104) auf dem pilzkopfartigen Steckverbinder (105) durch mindestens ein Kragenelement (111) des Sensorelements (102) gesichert ist, das konzentrisch zu dem pilzkopfartigen Steckverbinder (105) auf dem Sensorelement (102) angeordnet ist,
wobei das Kragenelement (111) gewichtskraftfrei die zylindrische bis kegelstumpfartige Aufnahmevorrichtung (108) des Saugfußes (104) umschließt.

5. Wägemodulvorrichtung für eine Küchenmaschine nach einem der Ansprüche 1 bis 4,
**dadurch gekennzeichnet, dass**
der Kraftsensor (101) ein Dehnungsmessstreifen ist, der auf der Basis einer etwa T-förmigen Struktur (120) im Sensorelement (102) angeordnet ist, wobei die T-förmige Struktur (120) Teil eines ringförmigen bis rechteckförmigen Elements (121) ist, wobei die T-förmige Struktur (120) in den inneren Bereich des ringförmigen bis rechteckförmigen Elements (121) ragt.

6. Wägemodulvorrichtung für eine Küchenmaschine nach Anspruch 5,
**dadurch gekennzeichnet, dass**
das Sensorelement (102) in einer zu seiner eigenen Struktur korrespondierenden Negativform (102') der Aufnahmevorrichtung (103) liegt und mit mindestens einem Widerhakenelement (122) in der Negativform (102') fixiert ist,
wobei die in den inneren Bereich der ringförmigen bis rechteckförmigen Elements (121) reichende T-förmige Struktur (120) durch eine Bohrung (123) in der Mitte der Negativform in der Aufnahmevorrichtung (103) frei liegt und durch die Bohrung (123) mit dem pilzkopfartigen Steckverbinder (105) in Wirkverbindung steht.

7. Wägemodulvorrichtung für eine Küchenmaschine nach einem der Ansprüche 1 bis 6,
**dadurch gekennzeichnet, dass**
die Aufnahmevorrichtung (103) eine obere Verschlusskappe (104) aufweist, welche die Sensorvorrichtung (102) vor Einwirkung von Staub und Flüssigkeit schützt.

8. Wägemodulvorrichtung für eine Küchenmaschine nach Anspruch 7,
**dadurch gekennzeichnet, dass**
die Verschlusskappe (124) Schraublöcher (125) aufweist, durch welche die Verschlusskappe (124) die Wägemodulvorrichtung (100) auf der Grundplatte (201) einer Küchenmaschine fixiert,
wobei der pilzkopfartigen Steckverbinder (105) zur Seite der Grundplatte (201) ausgerichtet ist und durch eine Öffnung in der Grundplatte (201) ragt.

## Claims

1. Weighing module device (100) for a kitchen appliance, having
- at least one force sensor (101) on a sensor element (102),
- at least one receiving device (103) for connecting the sensor element (102) to a baseplate (201) of the kitchen appliance,
- a suction foot (104), which is connected detachably to the sensor element (102), wherein when the kitchen appliance is used properly, the suction foot (104) is used as a lower support for the sensor element (102), and
wherein when the kitchen appliance is used properly, the receiving device (103) is used as an upper support for the sensor element (102), and wherein the weight force of the mass of the kitchen appliance and of the item to be weighed which is located therein acts on the sensor element (102) by way of the receiving device (103),
**characterised in that**
the sensor element (102) has a mushroom head-type plug connector (105), which, when the kitchen appliance is used properly, plugs into a central opening (106), in the suction foot (104), which points upwards and corresponds hereto.

2. Weighing module device for a kitchen appliance according to claim 1,
**characterised in that**
the suction foot (104) has a plate-type structure, wherein the concave lower part of the plate (107) is used as a foot underside, and
when the kitchen appliance is used properly, has an opening, which points upwards, in the form of an approximately cylindrical to truncated cone-type receiving device (108), which has an inwardly pointing edge (109), which engages behind a lower side (110) of the mushroom cap of the plug connector (105) of the sensor element (102).

3. Weighing module device for a kitchen appliance according to claim 2,
**characterised in that**
the suction foot (104) can be pivoted on the mushroom head-type plug connector (105) with two degrees of freedom about a solid angle of 0.5° to 2°.

4. Weighing module device for a kitchen appliance according to one of claims 2 to 3, **characterised in that**
the suction foot (104) is secured on the mushroom head-type plug connector (105) by means of at least one collar element (111) of the sensor element (102), which is arranged concentrically with respect to the mushroom head-type plug connector (105) on the sensor element (102),
wherein the collar element (111) surrounds the cylindrical to truncated cone-type receiving device (108) of the suction foot (104) in a weight force-free manner.

5. The weighing module device for a kitchen appliance according to one of claims 1 to 4. **characterised in that**
the force sensor (101) is a strain gauge which is arranged in the sensor element (102) on the basis of an approximately T-shaped structure (120), wherein the T-shaped structure (120) is part of a ring-shaped to rectangular-shaped element (121), wherein the T-shaped structure (120) projects into the inner region of the ring-shaped to rectangular-shaped element (121).

6. The weighing module device for a kitchen appliance according to claim 5, **characterised in that**
the sensor element (120) lies in a negative mould (102') of the receiving device (103) which corresponds to its separate structure and is fixed in the negative mould (102') with at least one barbed hook element (122)
wherein the T-shaped structure (120) which extends into the inner region of the ring-shaped to rectangular-shaped element (121) is exposed through a borehole (123) in the centre of the negative mould in the receiving device (103) and is actively connected to the mushroom head-type plug connector (105) through the borehole (123).

7. The weighing module device for a kitchen appliance according to one of claims 1 to 6, **characterised in that**
the receiving device (103) has an upper end cap (104), which protects the sensor device (102) from the effect of dust and liquid.

8. The weighing module for a kitchen appliance according to claim 7,
**characterised in that**
the end cap (124) has screw holes (125), through which the end cap (124) fixes the weighing module device (100) to the base plate (201) of a kitchen appliance,
wherein the mushroom head-type plug connector (105) is aligned to the side of the baseplate (201) and projects through an opening in the baseplate (201).

## Revendications

1. Dispositif formant module de pesage (100) destiné à un robot de cuisine, qui présente :
- au moins un capteur de force (101) sur un élément capteur (102) ;
- au moins un dispositif de réception (103) qui est destiné à la liaison de l'élément capteur (102) à une plaque de base (201) du robot de cuisine ;
- une ventouse (104) qui est reliée de manière amovible à l'élément capteur (102) ;
dans lequel la ventouse (104), lorsque l'on utilise le robot de cuisine de la manière qui convient, fait office de butée inférieure pour l'élément capteur (102) ; et
dans lequel le dispositif de réception (103), lorsque l'on utilise le robot de cuisine de la manière qui convient, fait office de butée supérieure pour l'élément capteur (102) ; et
dans lequel la pesanteur de la masse du robot de cuisine et de la denrée à peser qui s'y trouve, agit par l'intermédiaire du dispositif de réception (103), sur l'élément capteur (102) ;
**caractérisé en ce que**
l'élément capteur (102) présente un connecteur sous la forme d'une tête de champignon (105) qui vient s'enficher dans une ouverture (106) correspondant à cet effet, centrale et orientée vers le haut lorsque l'on utilise le robot de cuisine de la manière qui convient, qui est pratiquée dans la ventouse (104).

2. Dispositif formant module de pesage destiné à un robot de cuisine selon la revendication 1,
**caractérisé en ce que**
la ventouse (104) présente une structure en forme de plateau ; dans lequel le côté inférieur concave (107) du plateau fait office de côté inférieur du pied,
et présente une ouverture orientée vers le haut lorsque l'on utilise le robot de cuisine de la manière qui convient, sous la forme d'un dispositif de réception (108) qui possède une configuration qui va d'une forme approximativement cylindrique jusqu'à la forme d'un cône tronqué, qui présente un bord (109) orienté vers l'intérieur, qui vient saisir par l'arrière un côté inférieur (110) du chapeau de champignon du connecteur (105) de l'élément capteur (102).

3. Dispositif formant module de pesage destiné à un robot de cuisine selon la revendication 2,
**caractérisé en ce que**
la ventouse (104) est capable de pivoter sur le connecteur sous la forme d'une tête de champignon (105) avec deux degrés de liberté en formant un angle solide de 0,5° à 2°.

4. Dispositif formant module de pesage destiné à un robot de cuisine selon l'une quelconque des revendications 2 à 3,
**caractérisé en ce que**
la ventouse (104) est fixée au connecteur sous la forme d'une tête de champignon (105), par l'intermédiaire d'au moins un élément qui fait office de rebord (111), de l'élément capteur (102), l'élément en question étant disposé en position concentrique par rapport au connecteur sous la forme d'une tête de champignon (105), sur l'élément capteur (102) ;
dans lequel l'élément qui fait office de rebord (111) entoure, en l'absence de pesanteur, le dispositif de réception de la ventouse (104), qui possède une configuration qui va d'une forme cylindrique jusqu'à la forme d'un cône tronqué.

5. Dispositif formant module de pesage destiné à un robot de cuisine selon l'une quelconque des revendications 1 à 4,
**caractérisé en ce que**
le capteur de force (101) représente une bande de mesure de l'extension qui est disposée, dans l'élément capteur (102), sur la base d'une structure (120) qui possède approximativement la forme d'un T ; dans lequel la structure (120) qui possède la forme d'un T représente une partie d'un élément (121) qui possède une configuration qui va d'une forme annulaire jusqu'à une forme rectangulaire ; dans lequel la structure (120) qui possède la forme d'un T fait saillie dans la zone interne de l'élément (121) qui possède une configuration qui va d'une forme annulaire jusqu'à une forme rectangulaire.

6. Dispositif formant module de pesage destiné à un robot de cuisine selon la revendication 5,
**caractérisé en ce que**
l'élément capteur (102) est disposé dans une empreinte négative (102') du dispositif de réception (103), qui correspond à sa propre structure, et est fixé avec au moins un élément sous la forme d'un crochet (122) dans l'empreinte négative (102') ;
dans lequel la structure (120) qui possède la forme d'un T, s'étendant jusque dans la zone interne de l'élément (121) qui possède une configuration qui va d'une forme annulaire jusqu'à une forme rectangulaire, est disposé sans entraves, par l'intermédiaire d'un alésage (123) pratiqué dans le milieu de l'empreinte négative, dans le dispositif de réception (103), et entre en liaison opérationnelle, par l'intermédiaire de l'alésage (123), avec le connecteur sous la forme d'une tête de champignon (105).

7. Dispositif formant module de pesage destiné à un robot de cuisine selon l'une quelconque des revendications 1 à 6,
**caractérisé en ce que**
le dispositif de réception (103) présente un capuchon de fermeture supérieur (104) qui protège le dispositif capteur (102) contre l'effet de la poussière et des liquides.

8. Dispositif formant module de pesage destiné à un robot de cuisine selon la revendication 7,
**caractérisé en ce que**
le capuchon de fermeture (124) présente des trous taraudés (125) par l'intermédiaire desquels le capuchon de fermeture (124) fixe le dispositif faisant office de module de pesée (100) sur la plaque de base (201) d'un robot de cuisine ;
dans lequel le connecteur sous la forme d'une tête de champignon (105) est orienté dans la direction du côté de la plaque de base (201) et fait saillie à travers une ouverture pratiquée dans la plaque de base (201).
